# DEMANDE DE BREVET EUROPEEN

(11) **EP 4 303 422 A1**
(43) Date de publication de la demande: **10.01.2024**
(21) Numéro de dépôt: 23183498.7
(22) Date de dépôt: 05.07.2023
(51) Int. Cl.: F02C 7/36, F01D 25/18, F16H 57/04

(54) **DISPOSITIF DE RÉCUPÉRATION D' HUILE POUR UNE TURBOMACHINE**

(30) Priorité: 07.07.2022 FR 2206971
(71) Demandeur: SAFRAN AIRCRAFT ENGINES, 75015 Paris (FR); Safran Transmission Systems, 92700 Colombes (FR)
(72) Inventeur: PENNACINO, Antoine Jacques Marie, 77550 MOISSY-CRAMAYEL (FR); CHASSAGNE, Amélie Argie Antoinette, 77550 MOISSY-CRAMAYEL (FR); GEDIN, Patrice Jocelyn Francis, 77550 MOISSY-CRAMAYEL (FR); MARCOS IZQUIERDO, Juan-Luis, 77550 MOISSY-CRAMAYEL (FR); PELTIER, Jordane Emile André, 77550 MOISSY-CRAMAYEL (FR)
(74) Mandataire: Gevers & Orès

(57) **Abrégé**

Dispositif (26) de récupération d'huile pour un réducteur de turbomachine d'aéronef, le dispositif (26) comprenant une gouttière (27) s'étendant autour d'un axe (X) et étant destinée à être disposée en regard de moyens d'éjection d'huile (24) formés dans une couronne (19) du réducteur de la turbomachine, la gouttière (27) comprenant au moins une chambre (28) de réception d'huile qui s'étend autour de l'axe (X) et qui est ouverte vers l'axe (X) de sorte à recevoir de l'huile provenant des moyens d'éjection d'huile, la chambre (28) étant délimitée par une première paroi (29) et une seconde paroi (30) disposées en regard l'une de l'autre, la première paroi (29) comprenant un orifice (31) axial d'évacuation d'huile et la seconde paroi (30) présentant une dimension radiale (R1) vis-à-vis de l'axe (X) qui augmente de façon croissante suivant l'axe (X) en direction de l'orifice (31) axial, de manière à permettre d'acheminer de l'huile éjectée par le réducteur jusqu'à l'orifice (31) axial.

## Description

### Domaine technique de l'invention

La présente invention se rapporte à un dispositif de récupération d'huile, et une turbomachine comprenant un tel dispositif de récupération d'huile.

### Arrière-plan technique

Une turbomachine à double flux comprend classiquement une entrée d'air comportant une soufflante carénée dont le flux d'air en sortie se divise en un flux primaire qui pénètre dans une veine primaire du générateur de gaz et en un flux secondaire qui s'écoule dans une veine secondaire autour du générateur de gaz. Le générateur de gaz comprend classiquement d'amont en aval, dans le sens d'écoulement des gaz, au moins un compresseur, une chambre de combustion et au moins une turbine.

Dans le cas d'une turbomachine à réducteur, l'arbre de soufflante est entrainé par un arbre de turbine via un réducteur à train épicycloïdal. Le réducteur permet de réduire la vitesse de rotation de l'arbre de soufflante par rapport à celle de l'arbre de turbine. Le réducteur est classiquement placé dans une enceinte (communément appelée « enceinte huile »).

Comme son nom l'indique, un réducteur à train épicycloïdal comprend un train épicycloïdal comportant au moins un solaire, une couronne, des satellites et un porte-satellite. En fonction des besoins, un tel réducteur à train épicycloïdal peut être configuré de différentes manières.

On s'intéressera plus particulièrement dans la suite de la demande aux configurations dans lesquelles la couronne est mobile, à savoir notamment la configuration communément appelée « planétaire » et la configuration communément appelée « différentiel ».

Plus précisément, un réducteur planétaire présente un solaire solidaire de l'arbre de turbine, une couronne solidaire de l'arbre de soufflante et un porte-satellite fixe. À la différence du réducteur planétaire, le réducteur différentiel présente quant à lui un porte-satellite mobile.

Les paliers et les roues dentées de tels réducteurs sont abondamment lubrifiés avec de l'huile, pour notamment minimiser l'usure des surfaces de contact de ces différentes pièces, et ainsi maximiser le rendement et la durée de vie du réducteur.

L'huile est généralement injectée dans le réducteur via divers injecteurs, puis éjectée en périphérie de la couronne sous l'effet de la force centrifuge.

Il est connu des documents FR3084407A1 et FR3081513A1 au nom de la demanderesse d'implanter une gouttière de récupération d'huile autour de la couronne, de façon notamment à guider l'huile éjectée en direction d'une ou plusieurs sorties, et ainsi faciliter son évacuation de l'enceinte. Les documents précités décrivent des gouttières ouvertes qui s'étendent de façon continue autour de la couronne.

Les motoristes constatent que de telles gouttières sont perfectibles. En effet, les gouttières précitées sont engorgées d'huile, cet engorgement étant propice aux retours d'huile sur le réducteur, et notamment sur les pièces mobiles. De tels retours d'huile perturbent le comportement dynamique du réducteur, au détriment de son rendement.

L'objectif de la présente invention est donc d'apporter une solution simple, efficace et économique permettant de minimiser les retours d'huile sur le réducteur.

L'art antérieur comprend également le document US2021/310421A1.

### Résumé de l'invention

L'invention propose ainsi un dispositif de récupération d'huile pour un réducteur de turbomachine d'aéronef, le dispositif comprenant une gouttière s'étendant autour d'un axe X et étant destinée à être disposée en regard de moyens d'éjection d'huile formés dans une couronne du réducteur de la turbomachine, la gouttière comprenant au moins une chambre de réception d'huile qui s'étend autour de l'axe X et qui est ouverte vers l'axe X de sorte à recevoir de l'huile provenant des moyens d'éjection d'huile, la chambre étant délimitée par une première paroi et une seconde paroi disposées en regard l'une de l'autre, la première paroi comprenant un orifice axial d'évacuation d'huile et la seconde paroi présentant une dimension radiale R1 vis-à-vis de l'axe X qui augmente de façon croissante suivant l'axe X en direction de l'orifice axial, de manière à permettre d'acheminer de l'huile éjectée par le réducteur jusqu'à l'orifice axial.

Un tel dispositif permet d'évacuer une majeure partie de l'huile éjectée et ainsi de désengorger la chambre de réception. Ce désengorgement a pour conséquence de minimiser les retours d'huile sur le réducteur, au bénéfice notamment du comportement dynamique du réducteur et de son rendement. Il est bon de noter qu'une fois évacuée, l'huile n'est plus en mesure de retourner sur le réducteur. Le dimensionnement de la seconde paroi favorise l'évacuation d'huile puisqu'il permet d'acheminer efficacement l'huile éjectée jusqu'à l'orifice axial, sous l'effet de deux actions qui se combinent avantageusement. En effet, premièrement, la seconde paroi convertit progressivement la vitesse d'éjection radiale de l'huile en une vitesse axiale. Deuxièmement, la seconde paroi engendre une augmentation progressive de la pression de l'huile.

Le fait d'évacuer l'huile axialement permet de minimiser l'encombrement radial du dispositif de récupération d'huile.

Le dispositif selon l'invention peut comprendre une ou plusieurs des caractéristiques et/ou étapes suivantes, prises isolément les unes des autres ou en combinaison les unes avec les autres :
- les extrémités externes des première et seconde parois se relient bout-à-bout ;
- la chambre présente en section transversale une dimension axiale A1 qui diminue depuis l'ouverture de la chambre jusqu'au fond de la chambre ;
- la première paroi présente en section transversale un profil droit et radial ;
- la seconde paroi présente en section transversale un profil droit ou un profil courbe à concavité tournée vers l'axe X ;
- l'orifice axial s'étend suivant un axe X' qui est parallèle à l'axe X, l'axe X' de l'orifice axial étant radialement plus proche d'une extrémité externe de la première paroi que d'une extrémité interne de la première paroi ;
- la gouttière comprend un prolongement axial qui s'étend depuis la première paroi dans une direction qui est opposée à la seconde paroi, le prolongement et la première paroi formant une voie de retour pour l'huile évacuée ;
- la gouttière comprend deux chambres, les secondes parois des chambres étant reliées l'une à l'autre via un raccord ;
- les deux chambres sont symétriques par rapport à un plan P qui est perpendiculaire à l'axe X et qui passe par le raccord ;
- la gouttière est sectorisée;
- la gouttière comprend au moins un secteur d'anneau externe et un secteur d'anneau interne successifs autour de l'axe X, le prolongement axial du secteur d'anneau externe présentant un rayon externe R2 qui est supérieur au rayon externe R3 du prolongement axial du secteur d'anneau interne, de manière à éviter que l'huile évacuée dans la voie de retour ne tombe par gravité sur le réducteur ;
- la gouttière comprend une bride de fixation à une pièce fixe du réducteur et/ou une bride de fixation à un élément fixe d'une enceinte et/ou une bride de fixation à un support flexible du dispositif ;
- le dispositif comprend en outre un support flexible qui entoure et est disposé en regard de la gouttière ;
- le support flexible comprend une bride de fixation à une pièce fixe du réducteur et/ou une bride de fixation à un élément fixe d'une enceinte et/ou une bride de fixation à la gouttière.

La présente invention concerne également une turbomachine d'aéronef comprenant un réducteur à train épicycloïdal et un dispositif de récupération d'huile tel que décrit précédemment, le réducteur comprenant une couronne mobile en rotation autour de l'axe X, la gouttière étant disposée autour et en regard de moyens d'éjection d'huile formés dans la couronne.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique en demi-coupe axiale d'une turbomachine comprenant un dispositif de récupération d'huile selon l'invention ;
[Fig.2] la figure 2 est une vue en section transversale schématique d'un dispositif de récupération d'huile selon un premier mode de réalisation ;
[Fig.3] la figure 3 est une vue en section transversale schématique d'un dispositif de récupération d'huile selon un second mode de réalisation ;
[Fig.4] la figure 4 est une vue en section transversale schématique d'un dispositif de récupération d'huile selon un troisième mode de réalisation ;
[Fig.5] la figure 5 est une vue en section transversale schématique d'un dispositif de récupération d'huile selon un quatrième mode de réalisation ;
[Fig.6] la figure 6 est une vue en section transversale schématique d'un dispositif de récupération d'huile selon un cinquième mode de réalisation ;
[Fig.7] la figure 7 est une vue en section transversale schématique d'un dispositif de récupération d'huile selon un sixième mode de réalisation ;
[Fig.8] la figure 8 est une vue d'un exemple de sectorisation de la gouttière pour les dispositifs illustrés sur les figures 2 à 5 ;
[Fig.9] la figure 9 est une vue d'un exemple de sectorisation de la gouttière pour les dispositifs illustrés sur les figures 6 et 7.

### Description détaillée de l'invention

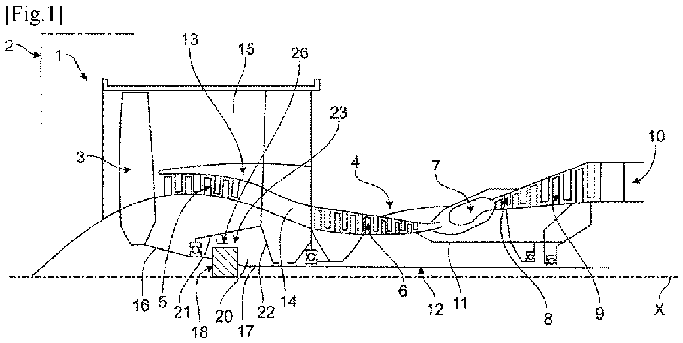

Sur la figure 1 est représentée partiellement une turbomachine 1 d'aéronef 2. L'aéronef 2 est par exemple un avion.

Par convention dans la présente demande, les termes « amont » et « aval » sont définis par rapport au sens de circulation des gaz dans la turbomachine 1.

Tel qu'illustré sur la figure 1, la turbomachine 1 comprend classiquement d'amont en aval, une soufflante 3 carénée et un générateur de gaz 4 comportant un compresseur basse pression 5, un compresseur haute pression 6, une chambre de combustion 7, une turbine haute pression 8, une turbine basse pression 9 et une tuyère d'échappement 10.

Le compresseur haute pression 6 et la turbine haute pression 8 sont reliés l'un à l'autre par un arbre haute pression 11 et forment avec lui un corps haute pression (HP). Le compresseur basse pression 5 et la turbine basse pression 9 sont reliés l'un à l'autre par un arbre basse pression 12 et forment avec lui un corps basse pression (BP).

Tel qu'illustré sur la figure 1, le flux d'air généré par la soufflante 3 est divisé, par une structure fixe 13 de la turbomachine 1, en un flux primaire qui pénètre dans une veine primaire 14 du générateur de gaz 4 et en un flux secondaire qui s'écoule dans une veine secondaire 15 autour du générateur de gaz 4, le flux secondaire participant de manière prépondérante à la poussée fournie par la turbomachine 1.

Tel qu'illustré sur la figure 1, la soufflante 3 est entrainée en rotation par un arbre de soufflante 16 qui est lui-même entrainé en rotation par un arbre de turbine basse pression (BP) 17 via un réducteur 18 à train épicycloïdal.

La turbomachine 1 est définie suivant un axe longitudinal X qui correspond notamment à l'axe de rotation des arbres de soufflante 16 et de turbine BP 17.

Tel qu'indiqué ci-dessus, le réducteur 18 à train épicycloïdal est ici de type « planétaire » ou « différentiel », et ci-après appelé réducteur. Le réducteur 18 permet de réduire la vitesse de rotation de l'arbre de soufflante 16 par rapport à celle de l'arbre de turbine BP 17.

Plus précisément, le réducteur 18 comprend un solaire central solidaire de l'arbre de turbine BP 17 et une couronne 19 solidaire de l'arbre de soufflante 16, le solaire et la couronne 19 étant mobiles autour de l'axe X. Le réducteur 18 comprend également un porte-satellite fixe (pour un réducteur de type « planétaire ») ou un porte-satellite mobile (pour un réducteur de type « différentiel ») qui porte plusieurs satellites répartis autour de l'axe X, chaque satellite étant engrené à la fois avec le solaire et la couronne 19.

La couronne 19 peut comprendre deux demi-couronnes bridées l'une à l'autre.

Le réducteur 18 peut être à simple ou à double étage.

Les éléments mobiles du réducteur 18 (tels que les satellites) peuvent être guidés en rotation via des paliers lisses ou des paliers à roulement.

Les différentes roues dentées du réducteur 18 peuvent par exemple être à denture droite, à denture hélicoïdale ou à denture en chevron.

Tel qu'illustré sur la figure 1, le réducteur 18 est logé et lubrifié dans une enceinte 20 annulaire autour de l'axe X, l'enceinte 20 étant positionnée dans la partie amont de la turbomachine 1. Plus précisément, l'enceinte 20 est ici formée par une branche amont 21 et une branche aval 22 de la structure fixe 13. L'enceinte 20 est ici fermée en amont par des joints au niveau d'un palier permettant la traversée de l'arbre de soufflante 16, et en aval par des joints au niveau de la traversée de l'arbre de turbine BP 17.

Le réducteur 18 est lubrifié via un système de lubrification 23. Le système de lubrification 23 comporte plusieurs injecteurs qui injectent de l'huile à l'intérieur du réducteur 18. L'huile injectée est centrifugée vers l'extérieur de manière à suivre un chemin prédéterminé, puis éjectée du réducteur 18 via des moyens d'éjection d'huile 24 formés dans la couronne 19.

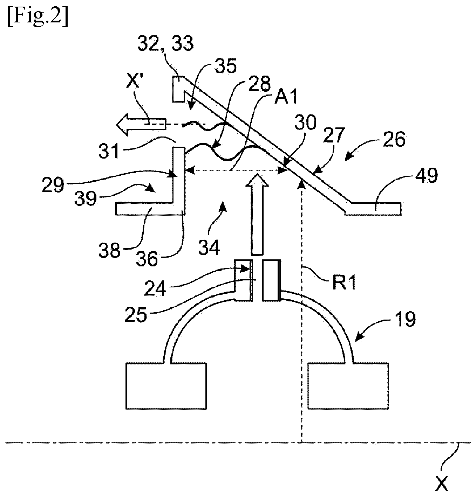

Selon les modes de réalisation des figures 2 à 7, les moyens d'éjection d'huile 24 se présentent par exemple sous la forme d'orifices 25 formés dans la couronne 19. Les orifices 25 sont ici radiaux et répartis de manière régulière autour de l'axe X.

Le système de lubrification 23 comprend en outre un dispositif 26 de récupération d'huile.

Selon l'invention, le dispositif 26 comprend une gouttière 27 qui s'étend autour de l'axe X et qui est disposée en regard des moyens d'éjection d'huile 24 formés dans la couronne 19. La gouttière 27 comprend au moins une chambre 28 de réception d'huile (ou chambre d'entrée) qui s'étend autour de l'axe X et qui est ouverte vers l'axe X (ou vers l'intérieur), de sorte à recevoir de l'huile provenant des moyens d'éjection d'huile. La chambre 28 est délimitée par une première paroi 29 et une seconde paroi 30 disposées en regard l'une de l'autre. La première paroi 29 de la chambre 28 comprend un orifice 31 axial d'évacuation d'huile. La seconde paroi 30 présente une dimension radiale R1 vis-à-vis de l'axe X qui augmente de façon croissante suivant l'axe X en direction de l'orifice 31 axial, de manière à permettre d'acheminer de l'huile éjectée par le réducteur 18 jusqu'à l'orifice 31 axial. Un tel dispositif 26 permet d'évacuer une majeure partie de l'huile éjectée et ainsi de désengorger la chambre de réception. Ce désengorgement a pour conséquence de minimiser les retours d'huile sur le réducteur, au bénéfice notamment du comportement dynamique du réducteur et de son rendement. Il est bon de noter qu'une fois évacuée, l'huile n'est plus en mesure de retourner sur le réducteur. Le dimensionnement de la seconde paroi favorise l'évacuation d'huile puisqu'il permet d'acheminer efficacement l'huile éjectée jusqu'à l'orifice axial, sous l'effet de deux actions qui se combinent avantageusement. En effet, premièrement, la seconde paroi convertit progressivement la vitesse d'éjection radiale de l'huile en une vitesse axiale. Deuxièmement, la seconde paroi engendre une augmentation progressive de la pression de l'huile.

Le fait d'évacuer l'huile axialement permet de minimiser l'encombrement radial du dispositif 26 de récupération d'huile.

L'augmentation de la dimension radiale R1 de la seconde paroi 30 est plus particulièrement visible sur les vues en section transversale des figures 2 à 7.

Le dispositif 26 de récupération d'huile est également défini suivant l'axe X.

Par convention dans la présente demande, les rayons (ou dimensions radiales) explicités dans cette demande ont pour référence l'axe X du dispositif 26 de récupération d'huile.

De plus, par convention dans la présente demande, les termes « avant » et « arrière » sont utilisés pour définir les positions axiales des éléments du dispositif 26 les uns par rapport aux autres.

En outre, par convention dans la présente demande, on entend par « axial » ou « axialement » toute direction parallèle à l'axe X de la turbomachine 1 ou du dispositif 26, par « radial » ou « radialement » toute direction perpendiculaire à l'axe X de la turbomachine 1 ou du dispositif 26, et par « circonférence » ou « circonférentiellement » toute direction relative à la circonférence de la turbomachine 1 ou du dispositif 26 (par opposition aux directions axiale et radiale explicitées ci-dessus).

Enfin, par convention dans la présente demande, les termes « interne », « externe », « intérieur » et « extérieur » sont définis radialement par rapport à l'axe X de la turbomachine 1 ou du dispositif 26.

Avantageusement, lorsque la gouttière 27 comprend une unique chambre 28, la gouttière 27 est disposée autour de la couronne 19 de sorte que la seconde paroi 30 est radialement alignée avec les moyens d'éjection d'huile 24 de la couronne 19, la seconde paroi 30 se trouve alors directement en regard des moyens d'éjection d'huile 24. Un tel positionnement permet de diriger l'huile éjectée directement sur la seconde paroi 30, de façon à faciliter son évacuation.

La première paroi 29 peut se trouver axialement devant la seconde paroi 30, la seconde paroi 30 s'évase alors de l'arrière vers l'avant.

La première paroi 29 peut se trouver axialement derrière la seconde paroi 30, la seconde paroi 30 s'évase alors de l'avant vers l'arrière.

Les extrémités externes 32, 33 des première et seconde parois 29, 30 peuvent se relier bout-à-bout.

Les extrémités externes 32, 33 des première et seconde parois 29, 30 peuvent être reliées indirectement l'une à l'autre, via par exemple une paroi de fond. La paroi de fond peut être droite ou courbe en section transversale. Avantageusement, la chambre 28 présente en section transversale une dimension axiale A1 qui diminue depuis son ouverture 34 jusqu'à son fond 35. La distance axiale A1 correspond à la distance axiale entre les première et seconde parois 29, 30. La réduction progressive de la dimension axiale A1 de la chambre 28 permet de concentrer l'huile au niveau du fond 35 de la chambre 28, de manière à favoriser son évacuation via le ou les orifices 31 axiaux.

La première paroi 29 peut présenter en section transversale un profil droit et radial. La première paroi 29 peut également présenter en section transversale un profil droit qui s'évase légèrement suivant l'axe X en direction de la seconde paroi 30.

La seconde paroi 30 peut présenter en section transversale un profil droit ou un profil courbe à concavité tournée vers l'axe X (ou l'intérieur). Sur la base du dimensionnement défini ci-dessus, la seconde paroi 30 s'évase ainsi suivant l'axe X en direction du ou des orifices 31 axiaux.

La première paroi 29 peut comprendre un ou plusieurs orifices 31 axiaux d'évacuation d'huile. Les orifices 31 peuvent présenter des caractéristiques dimensionnelles et géométriques identiques ou distinctes. Chaque orifice 31 peut être par exemple circulaire ou oblong.

La première paroi 29 peut comprendre plusieurs rangées d'orifices 31. Les rangées d'orifices 31 peuvent se superposer radialement les unes aux autres. Les rangées d'orifices 31 peuvent être distantes circonférentiellement les unes des autres.

Chaque orifice 31 axial s'étend (ou est défini) suivant un axe X' qui est parallèle à l'axe X. Avantageusement, l'axe X' de chaque orifice 31 axial est radialement plus proche de l'extrémité externe 32 de la première paroi 29 que de l'extrémité interne 36 de la première paroi 29. Un tel positionnement radial du ou des orifices 31 axiaux permet de maximiser la quantité d'huile évacuée.

Tel qu'illustré sur la figure 1, le dispositif 26 de récupération d'huile est ici fixé à un élément fixe de l'enceinte 20, comme par exemple la branche amont 21 ou la branche aval 22. La gouttière 27 peut ainsi comprendre une bride 37 de fixation à un élément fixe de l'enceinte 20.

La gouttière 27 peut être fixée à une pièce fixe du réducteur 18, comme par exemple le porte-satellite dans le cas d'un réducteur 18 planétaire. La gouttière 27 peut ainsi comprendre une bride de fixation à une pièce fixe du réducteur 18.

La gouttière 27 peut être fixée à un support flexible 45. La gouttière 27 peut ainsi comprendre une bride de fixation à un support flexible 45.

Avantageusement, le diamètre de la bride de fixation (ou des brides de fixation) de la gouttière 27 est supérieur au diamètre de la couronne 19, de façon à faciliter l'intégration de la gouttière 27 dans l'enceinte moteur.

La gouttière 27 peut comprendre un prolongement 38 axial (ou une jupe axiale) qui s'étend depuis la première paroi 29 dans une direction qui est opposée à la seconde paroi 30, le prolongement 38 et la première paroi 29 formant une voie 39 de retour pour l'huile évacuée. L'huile évacuée s'écoule dans la voie 39 de retour sous l'action de la gravité. Une telle voie 39 de retour permet de canaliser l'huile évacuée en direction d'une ou plusieurs sorties 40 qui évacuent l'huile en dehors de l'enceinte 20. La ou les sorties 40 sont de préférence disposées à 6h ou à proximité de 6h par analogie au cadran d'une horloge.

La gouttière 27 peut comprendre une seconde chambre 28, les secondes parois 30 des chambres 28 étant alors reliées l'une à l'autre via un raccord 41. L'ajout d'une seconde chambre 28 permet d'évacuer davantage d'huile, et par voie de conséquence de réduire davantage les retours d'huile sur le réducteur 18.

Les chambres 28 peuvent présenter des caractéristiques dimensionnelles et géométriques identiques ou distinctes.

Avantageusement, lorsque la gouttière 27 comprend deux chambres 28, la gouttière 27 est disposée autour de la couronne 19 de sorte que le raccord 41 est radialement aligné avec les moyens d'éjection d'huile 24 de la couronne 19, le raccord 41 se trouve alors directement en regard des moyens d'éjection d'huile 24. Un tel positionnement de la gouttière 27 permet d'utiliser le raccord 41 pour diviser l'huile éjectée en un premier flux d'huile qui se dirige dans la première chambre 28 et en un second flux d'huile qui se dirige dans la seconde chambre 28.

Avantageusement, les chambres 28 sont symétriques par rapport à un plan P qui est perpendiculaire à l'axe X et qui passe par le raccord 41.

Avantageusement, la dimension axiale du raccord 41 est inférieure à la dimension axiale A2 des orifices 25 formant les moyens d'éjection d'huile 24, de manière à minimiser les projections d'huile (résultant de l'impact de l'huile éjectée contre le raccord) tout en divisant l'huile éjectée.

Avantageusement, le raccord 41 se présente sous la forme d'une arrête ou d'un arrondi.

La gouttière 27 peut s'étendre de façon continue autour de l'axe X, et présenter ainsi une forme annulaire.

La gouttière 27 peut être sectorisée. Une gouttière sectorisée est généralement plus aisée à monter qu'une gouttière monobloc.

Les secteurs peuvent présenter des caractéristiques dimensionnelles et géométriques identiques ou distinctes.

Les secteurs peuvent être circonférentiellement accolés les uns aux autres (ou mis bout à bout), ou être distants les uns des autres.

Les secteurs peuvent se chevaucher.

Une gouttière 27 sectorisée peut présenter un dimensionnement spécifique pour des secteurs externe et interne 42a, 42b successifs autour de l'axe X. Avantageusement, le prolongement 38 axial du secteur externe 42a présente un rayon externe R2 qui est supérieur au rayon externe R3 du prolongement 38 axial du secteur interne 42b, de manière à éviter que l'huile évacuée qui circule dans la voie 39 de retour ne tombe par gravité sur des éléments mobiles du réducteur 18.

La gouttière 27 peut être utilisée pour supporter le porte-satellite d'un réducteur 18 planétaire. La gouttière 27 comprend alors une bride de fixation au porte-satellite du réducteur.

Avantageusement, la gouttière 27 peut comprendre des moyens élastiquement déformables (par exemple des soufflets) pour donner des mobilités axiales et/ou radiales au porte-satellite. La ou les chambres 28 peuvent être élastiquement déformables et formées les moyens élastiquement déformables.

Le dispositif 26 peut comprendre en outre un support flexible 45 qui entoure et est disposé en regard de la gouttière 27. Le support flexible 45 permet de fermer la ou les voies 39 de retour, de manière à imposer à l'huile évacuée de rejoindre la ou les sorties 40 qui évacuent l'huile en dehors de l'enceinte 20.

Des moyens d'étanchéité peuvent être placés entre la gouttière 27 et le support flexible 45, de façon à étanchéifier la ou les voies 39 de retour.

Le support flexible 45 peut être utilisé pour supporter le porte-satellite d'un réducteur 18 planétaire. Le support flexible 45 comprend alors une bride de fixation au porte-satellite du réducteur.

Le support flexible 45 peut comprendre des moyens élastiquement déformables 47 (par exemple des soufflets) pour donner des mobilités axiales et/ou radiales au porte-satellite. Les moyens élastiquement déformables 47 peuvent être disposés autour de la chambre 28 ou des chambres 28 de la gouttière 27.

Le support flexible 45 peut être fixé à un élément fixe de l'enceinte 20, comme par exemple la branche amont 21 ou la branche aval 22. Le support flexible 45 peut ainsi comprendre une bride 48 de fixation à un élément fixe de l'enceinte 20.

Le support flexible 45 peut être fixé à une pièce fixe du réducteur 18, comme par exemple le porte-satellite dans le cas d'un réducteur 18 planétaire. Le support flexible 45 peut ainsi comprendre une bride de fixation à une pièce fixe du réducteur 18.

Le support flexible 45 peut être fixé à la gouttière 27. Le support flexible 45 peut ainsi comprendre une bride de fixation à la gouttière 27.

Avantageusement, le diamètre de la bride de fixation (ou des brides de fixation) du support flexible 45 est supérieur au diamètre de la couronne 19, de façon à faciliter l'intégration du support flexible 45 dans l'enceinte moteur. Le support flexible 45 peut s'étendre de façon continue autour de l'axe X ou être sectorisée.

Sur les figures 2 à 9, l'itinéraire de l'huile est symbolisé par des flèches.

Selon le premier mode de réalisation illustré sur la figure 2, le dispositif 26 comprend une gouttière 27 avec une chambre 28.

Plus précisément, la chambre 28 présente en section transversale un profil triangulaire. La première paroi 29 présente en section transversale un profil droit et radial. La seconde paroi 30 présente en section transversale un profil droit qui s'évase suivant l'axe X en direction du ou des orifices 31. Les extrémités externes 32, 33 des première et seconde parois 29, 30 sont reliées directement l'une à l'autre. En section transversale, la dimension axiale A1 de la chambre 28 diminue depuis son ouverture 34 jusqu'à son fond 35. La gouttière 27 comprend un prolongement 38 avant qui s'étend axialement depuis la première paroi 29 vers l'avant, le prolongement 38 avant et la première paroi 29 formant la voie 39 de retour pour l'huile évacuée. La gouttière 27 comprend une extension arrière 49 qui s'étend axialement depuis la seconde paroi 30 vers l'arrière. L'extrémité libre de l'extension arrière 49 peut comprendre une bride de fixation à un porte-satellite du réducteur. L'extrémité libre du prolongement 38 avant peut comprendre une bride de fixation à un élément fixe de l'enceinte 20.

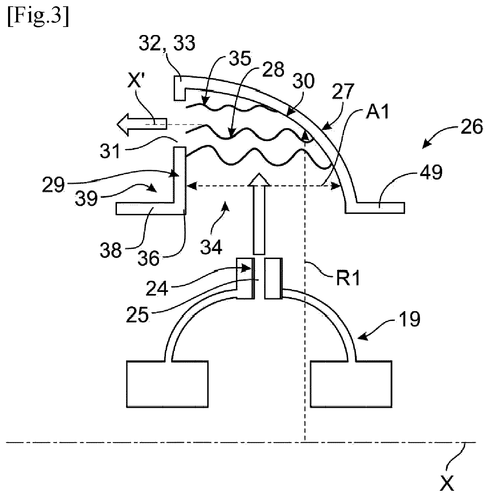

Selon le second mode de réalisation illustré sur la figure 3, le dispositif 26 comprend une gouttière 27 avec une chambre 28.

Plus précisément, la chambre 28 présente en section transversale un profil en quart de cercle. La première paroi 29 présente en section transversale un profil droit et radial. La seconde paroi 30 présente en section transversale un profil courbe à concavité tournée vers l'axe X qui s'évase suivant l'axe X en direction du ou des orifices 31. Les extrémités externes 32, 33 des première et seconde parois 29, 30 sont reliées directement l'une à l'autre. En section transversale, la dimension axiale A1 de la chambre 28 diminue depuis son ouverture 34 jusqu'à son fond 35. La gouttière 27 comprend un prolongement 38 avant qui s'étend axialement depuis la première paroi 29 vers l'avant, le prolongement 38 avant et la première paroi 29 formant la voie 39 de retour pour l'huile évacuée. La gouttière 27 comprend une extension arrière 49 qui s'étend axialement depuis la seconde paroi 30 vers l'arrière. L'extrémité libre de l'extension arrière 49 peut comprendre une bride de fixation à un porte-satellite du réducteur. L'extrémité libre du prolongement 38 avant peut comprendre une bride de fixation à un élément fixe de l'enceinte 20.

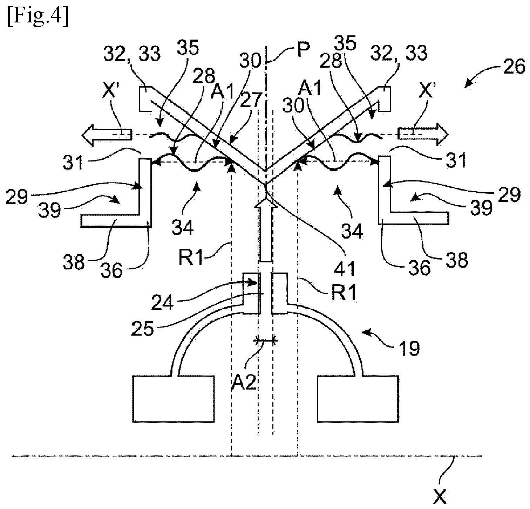

Selon le troisième mode de réalisation illustré sur la figure 4, le dispositif 26 comprend une gouttière 27 avec deux chambres 28.

Plus précisément, les chambres 28 sont ici symétriques par rapport à un plan P qui est perpendiculaire à l'axe X et qui passe par le raccord 41. Chaque chambre 28 présente en section transversale un profil triangulaire. La première paroi 29 de chaque chambre 28 présente en section transversale un profil droit et radial. La seconde paroi 30 de chaque chambre 28 présente en section transversale un profil droit qui s'évase suivant l'axe X en direction du ou des orifices 31. Les extrémités externes 32, 33 des première et seconde parois 29, 30 de chaque chambre 28 sont reliées directement l'une à l'autre. En section transversale, la dimension axiale A1 de chaque chambre 28 diminue depuis son ouverture 34 jusqu'à son fond 35. Le raccord 41 se présente ici sous la forme d'une arrête. La gouttière 27 comprend un prolongement 38 avant qui s'étend axialement depuis la première paroi 29 de la chambre 28 avant, le prolongement 38 avant et la première paroi 29 (chambre avant) formant une voie 39 de retour avant pour l'huile évacuée via le ou les orifices 31 de la chambre 28 avant. La gouttière 27 comprend également un prolongement 38 arrière qui s'étend axialement depuis la première paroi 29 de la chambre 28 arrière, le prolongement 38 arrière et la première paroi 29 (chambre arrière) formant une voie 39 de retour arrière pour l'huile évacuée via le ou les orifices 31 de la chambre 28 arrière. L'extrémité libre du prolongement 38 arrière peut comprendre une bride de fixation à un porte-satellite du réducteur. L'extrémité libre du prolongement 38 avant peut comprendre une bride de fixation à un élément fixe de l'enceinte 20.

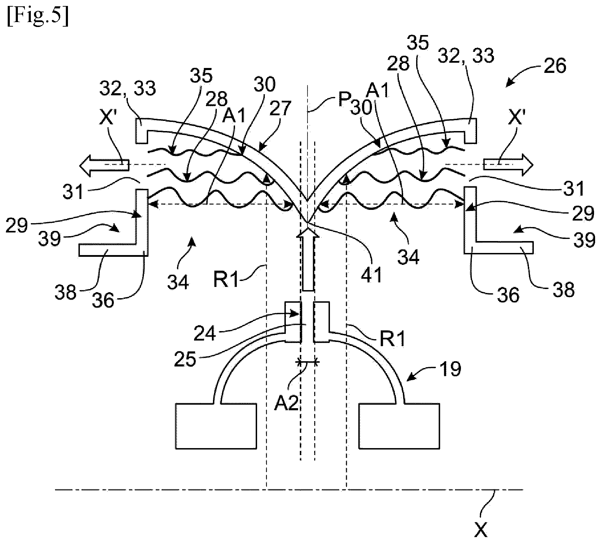

Selon le quatrième mode de réalisation illustré sur la figure 5, le dispositif 26 comprend une gouttière 27 avec deux chambres 28.

Plus précisément, les chambres 28 sont ici symétriques par rapport à un plan P qui est perpendiculaire à l'axe X et qui passe par le raccord 41. Chaque chambre 28 présente en section transversale un profil en quart de cercle. La première paroi 29 de chaque chambre 28 présente en section transversale un profil droit et radial. La seconde paroi 30 de chaque chambre 28 présente en section transversale un profil courbe à concavité tournée vers l'axe X qui s'évase suivant l'axe X en direction du ou des orifices 31. Les extrémités externes 32, 33 des première et seconde parois 29, 30 de chaque chambre 28 sont reliées directement l'une à l'autre. En section transversale, la dimension axiale A1 de chaque chambre 28 diminue depuis son ouverture 34 jusqu'à son fond 35. Le raccord 41 se présente ici sous la forme d'un arrondi. La gouttière 27 comprend un prolongement 38 avant qui s'étend axialement depuis la première paroi 29 de la chambre 28 avant, le prolongement 38 avant et la première paroi 29 (chambre avant) formant une voie 39 de retour avant pour l'huile évacuée via le ou les orifices 31 de la chambre 28 avant. La gouttière 27 comprend un prolongement 38 arrière qui s'étend axialement depuis la première paroi 29 de la chambre 28 arrière, le prolongement 38 arrière et la première paroi 29 (chambre arrière) formant une voie 39 de retour arrière pour l'huile évacuée via le ou les orifices 31 de la chambre 28 arrière. L'extrémité libre du prolongement 38 arrière peut comprendre une bride de fixation à un porte-satellite du réducteur. L'extrémité libre du prolongement 38 avant peut comprendre une bride de fixation à un élément fixe de l'enceinte 20.

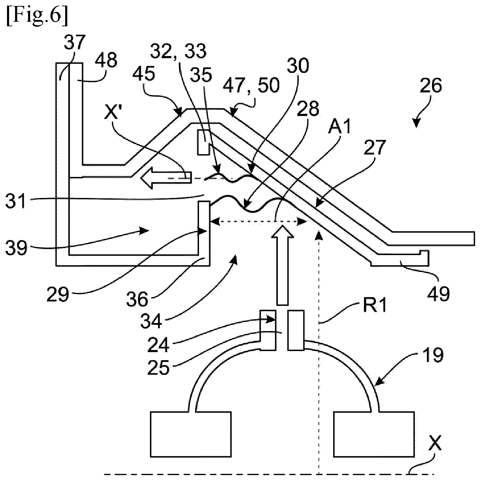

Selon le cinquième mode de réalisation illustré sur la figure 6, le dispositif 26 comprend une gouttière 27 avec une chambre 28 et un support flexible 45.

La gouttière 27 illustrée sur la figure 6 est semblable à la gouttière 27 illustrée sur la figure 2. Le support flexible 45 entoure et est disposé en regard de la gouttière 27. La voie 39 de retour est ainsi fermée extérieurement par le support flexible 45. Le support flexible 45 comprend des moyens élastiquement déformables 47 qui se présentent sous la forme d'un renflement 50. Le renflement 50 est disposé autour de la chambre 28 de la gouttière 27. Le renflement 50 est divisé en trois portions qui présentent chacune en section transversale un profil droit. La gouttière 27 et le support flexible 45 comprennent chacun une bride 37, 48 de fixation à un élément fixe de l'enceinte 20. Les brides 37, 48 de la gouttière 27 et du support flexible 45 sont ici disposées à l'avant et accolées l'une à l'autre. L'extrémité libre arrière du support flexible 45 comprend ici une bride de fixation (non représentée) à un porte-satellite du réducteur 18.

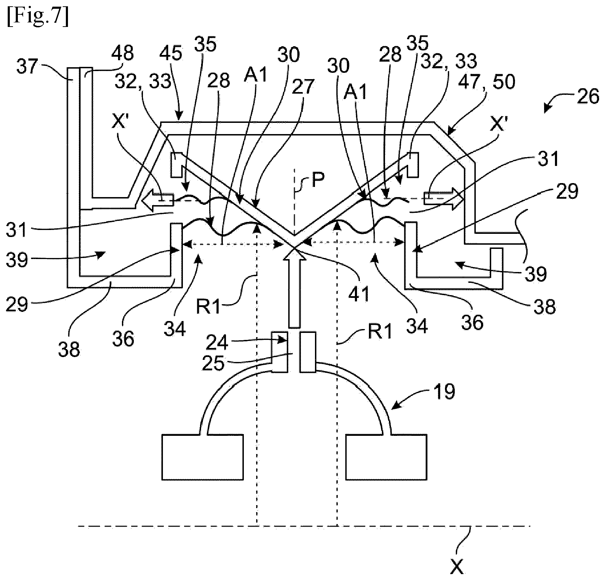

Selon le sixième mode de réalisation illustré sur la figure 7, le dispositif 26 comprend une gouttière 27 avec deux chambres 28 et un support flexible 45. La gouttière 27 illustrée sur la figure 7 est semblable à la gouttière 27 illustrée sur la figure 4. Le support flexible 45 entoure et est disposé en regard de la gouttière 27. Les voies 39 de retour avant et arrière sont ainsi fermées extérieurement par le support flexible 45. Le support flexible 45 comprend des moyens élastiquement déformables 47 qui se présentent sous la forme d'un renflement 50. Le renflement 50 est disposé autour des chambres 28 de la gouttière 27. Le renflement 50 est divisé en quatre portions qui présentent chacune en section transversale un profil droit. La gouttière 27 et le support flexible 45 comprennent chacun une bride 37, 48 de fixation à un élément fixe de l'enceinte 20. Les brides 37, 48 de la gouttière 27 et du support flexible 45 sont ici disposées à l'avant et accolées l'une à l'autre.

L'extrémité libre arrière du support flexible 45 comprend ici une bride de fixation (non représentée) à un porte-satellite du réducteur 18.

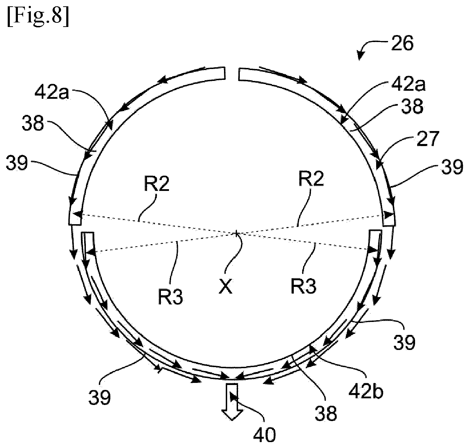

La figure 8 illustre un exemple de sectorisation de la gouttière 27 pour les dispositifs 26 illustrés sur les figures 2 à 5, et autrement dit les dispositifs 26 qui comprennent uniquement une gouttière 27.

Tel qu'illustré sur la figure 8, la gouttière 27 sectorisée comprend trois secteurs d'anneau, à savoir deux secteurs d'anneau externes 42a et un secteur d'anneau interne 42b. Les secteurs d'anneau externes 42a présentent un angle au centre de 90° et le secteur d'anneau interne 42b présente un angle au centre de 180°. Le ou les prolongements 38 axiaux du secteur d'anneau externe 42a présentent un rayon externe R2 qui est supérieur au rayon externe R3 du ou des prolongements 38 axiaux du secteur d'anneau interne 42b, de manière à ce que l'huile évacuée circule dans la ou les voies 39 de retour par gravité jusqu'à une sortie 40 commune située à 6h par analogie au cadran d'une horloge, sans tomber sur le réducteur 18.

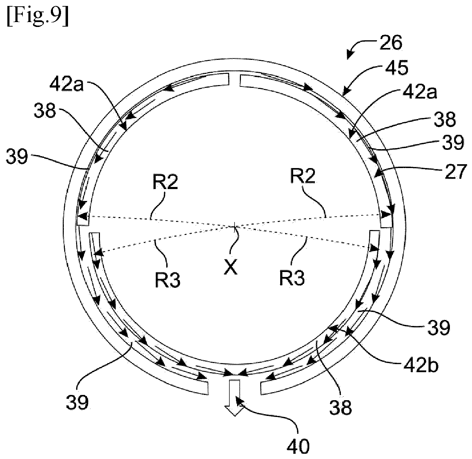

La figure 9 illustre un exemple de sectorisation de la gouttière 27 pour les dispositifs 26 illustrés sur les figures 6 et 7, et autrement dit les dispositifs 26 qui comprennent une gouttière 27 et un support flexible 45.

À la différence de la figure 8, le dispositif 26 comprend ici un support flexible 45 qui entoure et est disposé en regard des secteurs d'anneau 42a, 42b de la gouttière 27. Le support flexible 45 s'étend ici de façon continue autour de l'axe X.

## Revendications

1. Dispositif (26) de récupération d'huile pour un réducteur (18) de turbomachine (1) d'aéronef (2), le dispositif (26) comprenant une gouttière (27) s'étendant autour d'un axe (X) et étant destinée à être disposée en regard de moyens d'éjection d'huile (24) formés dans une couronne (19) du réducteur (18) de la turbomachine (1), la gouttière (27) comprenant au moins une chambre (28) de réception d'huile qui s'étend autour de l'axe (X) et qui est ouverte vers l'axe (X) de sorte à recevoir de l'huile provenant des moyens d'éjection d'huile (24), la chambre (28) étant délimitée par une première paroi (29) et une seconde paroi (30) disposées en regard l'une de l'autre, la première paroi (29) comprenant un orifice (31) axial d'évacuation d'huile et la seconde paroi (30) présentant une dimension radiale (R1) vis-à-vis de l'axe (X) qui augmente de façon croissante suivant l'axe (X) en direction de l'orifice (31) axial, de manière à permettre d'acheminer de l'huile éjectée par le réducteur jusqu'à l'orifice (31) axial.

2. Dispositif (26) selon la revendication 1, **caractérisé en ce que** les extrémités externes (32, 33) des première et seconde parois (29, 30) se relient bout-à-bout.

3. Dispositif (26) selon l'une des revendications 1 ou 2, **caractérisé en ce que** la chambre (28) présente en section transversale une dimension axiale (A1) qui diminue depuis l'ouverture (34) de la chambre (28) jusqu'au fond (35) de la chambre (28).

4. Dispositif (26) selon l'une des revendications 1 à 3, **caractérisé en ce que** la première paroi (29) présente en section transversale un profil droit et radial.

5. Dispositif (26) selon l'une des revendications 1 à 4, **caractérisé en ce que** la seconde paroi (30) présente en section transversale un profil droit ou un profil courbe à concavité tournée vers l'axe (X).

6. Dispositif (26) selon l'une des revendications 1 à 5, **caractérisé en ce que** l'orifice (31) axial s'étend suivant un axe (X') qui est parallèle à l'axe (X), l'axe (X') de l'orifice (31) axial étant radialement plus proche d'une extrémité externe (32) de la première paroi (29) que d'une extrémité interne (36) de la première paroi (29).

7. Dispositif (26) selon l'une des revendications 1 à 6, **caractérisé en ce que** la gouttière (27) comprend un prolongement (38) axial qui s'étend depuis la première paroi (29) dans une direction qui est opposée à la seconde paroi (30), le prolongement (38) et la première paroi (29) formant une voie (39) de retour pour l'huile évacuée.

8. Dispositif (26) selon l'une des revendications 1 à 7, **caractérisé en ce que** la gouttière (27) comprend deux chambres (28), les secondes parois (30) des chambres (28) étant reliées l'une à l'autre via un raccord (41).

9. Dispositif (26) selon la revendication 8, **caractérisé en ce que** les deux chambres (28) sont symétriques par rapport à un plan (P) qui est perpendiculaire à l'axe (X) et qui passe par le raccord (41).

10. Dispositif (26) selon l'une des revendications 1 à 9, **caractérisé en ce que** la gouttière (27) est sectorisée.

11. Dispositif (26) selon la revendication 10 prise en combinaison avec la revendication 7, **caractérisé en ce que** la gouttière (27) comprend au moins un secteur d'anneau externe (42a) et un secteur d'anneau interne (42b) successifs autour de l'axe (X), le prolongement (38) axial du secteur d'anneau externe (42a) présentant un rayon externe (R2) qui est supérieur au rayon externe (R3) du prolongement (38) axial du secteur d'anneau interne (42b), de manière à éviter que l'huile évacuée dans la voie (39) de retour ne tombe par gravité sur le réducteur (18).

12. Dispositif (26) selon l'une des revendications 1 à 11, **caractérisé en ce que** la gouttière (27) comprend une bride de fixation à une pièce fixe du réducteur (18) et/ou une bride de fixation à un élément fixe (21, 22) d'une enceinte (20) et/ou une bride de fixation à un support flexible (45).

13. Dispositif (26) selon l'une des revendications 1 à 12, **caractérisé en ce que** le dispositif (26) comprend en outre un support flexible (45) qui entoure et est disposé en regard de la gouttière (27).

14. Dispositif (26) selon la revendication 13, **caractérisé en ce que** le support flexible (45) comprend une bride de fixation à une pièce fixe du réducteur (18) et/ou une bride de fixation à un élément fixe (21, 22) d'une enceinte (20) et/ou une bride de fixation à la gouttière (27).

15. Turbomachine (1) d'aéronef (2) comprenant un réducteur (18) à train épicycloïdal et un dispositif (26) de récupération d'huile selon l'une des revendications précédentes, le réducteur (18) comprenant une couronne (19) mobile en rotation autour de l'axe (X), la gouttière (27) étant disposée autour et en regard de moyens d'éjection d'huile (24) formés dans la couronne (19).
